(19) Europäisches Patentamt
European Patent Office
Office européen des brevets

(11) Veröffentlichungsnummer: **0 372 180 B1**

# (12) EUROPÄISCHE PATENTSCHRIFT

(45) Veröffentlichungstag der Patentschrift: **27.10.93**

(51) Int. Cl.[5]: **C04B 35/50**

(21) Anmeldenummer: **89117444.3**

(22) Anmeldetag: **21.09.89**

## (54) Keramiksystem.

(30) Priorität: **03.12.88 DE 3840769**

(43) Veröffentlichungstag der Anmeldung:
**13.06.90 Patentblatt 90/24**

(45) Bekanntmachung des Hinweises auf die Patenterteilung:
**27.10.93 Patentblatt 93/43**

(84) Benannte Vertragsstaaten:
**DE FR GB**

(56) Entgegenhaltungen:
**FR-A- 1 449 899**
**GB-A- 2 081 733**
**US-A- 4 040 845**
**US-A- 4 057 433**
**US-A- 4 415 673**

(73) Patentinhaber: **SHERA-WERKSTOFFTECHNOLOGIE GMBH**
**Espohlstrasse 53**
**D-49448 Lemförde(DE)**

(72) Erfinder: **Nowack, Norbert, Prof.-Dr.**
**Kornelius-Feyen-Strasse 10a**
**D-4156 Willich-2(Anrath)(DE)**
Erfinder: **Grill, Günter c/o SHERA-Werkstofftechnologie GmbH**
**Espohlstrasse 53**
**D-2844 Lemförde(DE)**

(74) Vertreter: **Stenger, Watzke & Ring Patentanwälte**
**Kaiser-Friedrich-Ring 70**
**D-40547 Düsseldorf (DE)**

**EP 0 372 180 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Keramiksystem für Schmelzen aus Titan, Zirkonium oder deren Legierungen. - Die Erfindung betrifft ferner die Verwendung eines derartigen Keramiksystems für zwei verschiedene Zwecke. - Die Erfindung betrifft schließlich ein Verfahren zum Herstellen einer Primärschicht auf einem Modell eines zu gießenden Feingußteils oder zum Beschichten eines Tiegels unter Verwendung eines derartigen Keramiksystems.

Das Hauptanwendungsgebiet des erfindungsgemäßen Keramiksystems betrifft Schmelzen aus Titan oder dessen Legierungen, so daß insofern auf diese Metalle im nachfolgenden Bezug genommen wird. Da sich Zirkonium oder dessen Legierungen ähnlich wie Titan oder dessen Legierungen im Hinblick auf die chemischen und auch physikalisch-chemischen Eigenschaften verhält, gilt das für Titan und dessen Legierungen Gesagte auch für das Zirkonium und dessen Legierungen in entsprechender Weise. Gegenüber dem Zirkonium und dessen Legierungen ist jedoch das Titan und dessen Legierungen technisch wesentlich wichtiger, so daß hier der Schwerpunkt liegt.

In der Medizintechnik und dabei insbesondere in der Dentaltechnik werden Prothetikteile, wenn diese individuell für jeden Patienten hergestellt werden müssen, aus Legierungen gefertigt, indem entsprechende Gußformen geschaffen werden, in die die flüssigen Legierungen gegossen werden. Nach dem Erstarren der Legierung wird die Gußform entfernt und man erhält das Legierungsgußteil. Zum Herstellen dieser Gußformen werden Gußeinbettmassen verwendet, die auf einem Keramiksystem basieren.

Neben den Gußeinbettmassen gibt es noch Gußfeineinbettmassen, die sich von den Gußeinbettmassen dadurch unterscheiden, daß bei der Herstellung der Gußform ein zusätzlicher Verfahrensschritt erforderlich ist. Bei Anwendung der Gußfeineinbettmasse wird ein Wachsmodell des späteren Hohlraums der Gußform für den Legierungsguß mit der Gußfeineinbettmasse überzogen. Dabei wird eine Suspension der Gußfeineinbettmasse beispielsweise mit einem Pinsel auf das Wachsmodell aufgetragen und so mit einer Primärschicht ummantelt. Das Wachsmodell mit der eingetrockneten Primärschicht aus der Gußfeineinbettmasse wird anschließend mit einer gewöhnlichen Gußeinbettmasse umgossen, die dann die Sekundärschicht bildet, um so die endgültige Gußform herzustellen. Durch Erwärmen fließt das Wachs aus der Gußform heraus und hinterläßt einen Hohlraum, der später von der Gußlegierung ausgefüllt wird.

Feingußteile aus Titan oder dessen Legierungen konnten insbesondere eine breite Anwendung in Bereichen der Medizintechnik für Implantatteile, Zahnersatz etc. finden, denn Titan und dessen Legierungen zeichnen sich durch eine außerordentlich hohe Korrosionsbeständigkeit im menschlichen Körper und durch ein hohes Maß an Biokompatibilität aus. Diese äußerst positiven Eigenschaften sind verbunden mit einer niedrigen Dichte, die etwa halb so groß ist wie bei den gewöhnlichen Fe-, Ni- oder Co-Basislegierungen, die derzeit in medizinisch-technischen Bereichen eingesetzt werden. Schließlich zeichnet sich Titan und dessen Legierungen durch hohe Festigkeitswerte aus.

Bislang werden Titanteile, beispielsweise künstliche Gelenke, Knochenteile etc., nur durch Schmieden hergestellt. Die Herstellung von kleinen, dünnwandigen und filigranen Titanteilen, wie sie im medizinischen Bereich und dabei insbesondere in der Dentaltechnik sowie auch im Bereich der Herstellung von Schmuck und Uhrenteilen gefordert werden, ist bislang noch nicht gelungen. Die Gründe hierfür lassen sich auf die schwierige Feingießtechnik für Titan bzw. dessen Legierungen zurückführen. Insbesondere laufen beim Vergießen von Titan oder dessen Legierungen zahlreiche chemische Reaktionen zwischen der keramischen Gußform und dem flüssigen Metall ab, die zu Versprödungen des Titans bzw. dessen Legierungen sowie zu einem Verlust der hohen Korrosionsbeständigkeit führen, so daß die Feingußteile unbrauchbar sind. Denn die Oberfläche des Titangußteils müßte durch die Versprödung durch Beizen oder Schleifen nachbearbeitet bzw. abgearbeitet werden. Im Bereich der Medizintechnik würden jedoch die Feingußteile dadurch unakzeptabel in ihren Geometrien verändert. Bei dünnen Teilen, wie sie beispielsweise im Bereich der Dentaltechnik vorkommen und wo die Wandstärke nur einige Millimeter beträgt, könnte die abzuarbeitende Schicht die Stärke des Gußteils besitzen, was alle dentaltechnischen Arbeiten ausschließen würde. Eine funktionierende Gießtechnik von dünnen, meist kleinen und filigranen Teilen ist somit die Voraussetzung für eine Anwendung im medizinischen Bereich, zumal die Gußteile individuell angefertigt werden müssen, da sie dem jeweiligen Patienten im Körper angepaßt werden müssen. Dies setzt weiterhin eine hohe Gußpräzision voraus.

Die beschriebenen Probleme bei Titan-Feingußteilen liegen, wie bereits erwähnt, in der Entstehung einer versprödeten Oberfläche, die in der Technik "alpha-case" genannt wird. Damit ist die Bildung einer Randzone auf dem Titangußstück gemeint, in der dieses stark versprödet ist, wobei die Schichtdicke je nach Gußteilgeometrie, Gießbedingungen und Verfahrenstechnik Stärken von 0,1 bis 2 mm besitzt. Diese alpha-case-Schicht entsteht durch chemische Reaktionen zwischen dem flüssigen Titan bzw. der flüssigen Titanlegierung und der keramischen Formmasse beim Gießen des Gußteils. Hiervon sind insbesondere

feine, kleine und filigrane Teile betroffen. Mit den bisher bekannten keramischen Formmassen, beispielsweise Korund, Magnesit, Calciumoxid, Zirkonoxiden, Quarzen etc., läßt sich die Bildung der alpha-case-Schichten nicht verhindern.

Beim Gießen, bei dem Temperaturen von 1650 bis 1800 °C herrschen, nimmt nämlich das Titan bzw. dessen Legierung infolge der hohen Sauerstoffaffinität des Titans Sauerstoff sowie die entsprechende Metallkomponente, die das Oxid in der Keramikmasse bildet, auf. Dieser Vorgang findet auch dann statt, wenn unter der Bedingung einer Edelgasatmosphäre gegossen wird. Der Sauerstoff verursacht dabei die hohe Versprödung, da schon geringe Gehalte von interstitiell eingelagerten Sauerstoffatome im Metallgitter des Titans eine starke Abnahme der Duktilität zur Folge haben. Die entsprechende aufgelöste Metallkomponente erzeugt demgegenüber nicht die starke Versprödung. Selbst die thermochemisch stabilsten Oxide, wie sie in der bisherigen Gießereitechnik verwendet werden, wie Aluminiumoxid (Korund), Zirkonium(IV)-oxid, Magnesiumoxid (Magnesit) etc., werden von dem flüssigen Titan bzw. dessen Legierungen vehement angegriffen und geben dabei Sauerstoff an das flüssige Metall ab. Gleichzeitig werden die entsprechenden Metalle (Al, Zr, Mg, Ca etc.) freigesetzt. Diese werden vom Titan aufgelöst oder verdampfen in einigen Fällen teilweise, wie dies bei Mg und Ca der Fall ist. Thermodynamisch sind somit diese Keramikmassen gegenüber Titan bzw. dessen Legierungen instabil. Diese Instabilität liegt in den Gleichgewichtskonstanten (chemisches Gleichgewicht) der chemischen Reaktionen begründet. Diese Gleichgewichtskonstanten lassen sich berechnen, da bei den beim Gießvorgang herrschenden hohen Temperaturen chemische Reaktionen thermodynamisch kontrolliert ablaufen. So liegt das chemische Gleichgewicht für die Komponenten $Al_2O_3$, $ZrO_2$, $ZrO_2 . CaO . MgO$ sowie CaO stark auf der Seite der ablaufenden Reaktionen der Titan-Umsetzung und Reduktion der entsprechenden keramischen Stoffe.

Die Probleme hinsichtlich des Titans oder dessen Legierungen treten dabei nicht nur dann auf, wenn das Keramiksystem für eine Gußeinbettmasse bzw. für eine Gußfeineinbettmasse verwendet wird, sondern bereits auch dann, wenn das Titan oder dessen Legierungen in Tiegeln erschmolzen wird. Titan oder dessen Legierungen greift nämlich alle bislang gebräuchlichen Tiegelmaterialien beim Aufschmelzen durch chemische Reaktionen derart an, daß die Tiegel zerstört werden. Sämtliche in der Technik bekannten Keramikmaterialien sind nämlich gegen Titan- bzw. Titan-Legierungs-Schmelzen nicht beständig. Die Keramikmaterialien lösen sich dabei in der Schmelze auf, der Sauerstoffgehalt der Schmelze wird stark erhöht und - sofern es sich um Oxidkeramiken handelt - die Legierungszusammensetzung wird stark verändert, so daß auch aus diesem Grunde das Erschmelzen von Titan oder dessen Legierungen erfolglos ist. Auch Tiegelmaterialien auf Kohlenstoffbasis werden von der flüssigen Schmelze angegriffen, indem diese sehr stark Kohlenstoff bis zur Sättigung aufnehmen. Das Titan oder dessen Legierungen versprödet dabei und ist für technische Zwecke nicht mehr verwendbar (TiC-Bildung).

Aus der US-A 4,057 433 ist ein Keramiksystem für Schmelzen aus Titan oder Zirkonium bekannt, wobei das Keramiksystem Lanthan(III)-oxidfluorid (LaOF) enthält. Allerdings kann mit diesem bekannten Keramiksystem eine alpha-case-Bildung auf dem Titan prinzipiell nicht vermieden werden und es sind auch keine resistenten Innenbeschichtungen gegenüber Titan-Schmelzen herstellbar. Der Grund liegt darin, daß die Primärschicht des Keramiksystems immer aus LaOF und dem gegenüber Titan instabilen Keramikbestandteil $ZrO_2$ besteht.

Daneben kann $ZrO_2$ mit der Fluoridkomponente gasförmiges $ZrF_4$ in der Primärschicht im Bereich der hohen Temperaturen bilden, so daß sich ein Gasfilm bilden kann. Die erstarrende Titan-Schicht erhält somit Gasblaseneinschlüsse in der Oberfläche, was bei der Herstellung hochwertiger, filigraner Titan-Teile, wie sie in der Medizintechnik verwendet werden, nicht akzeptiert werden kann.

In der FR-A 1 449 899 ist ein Material offenbart, welches gegenüber flüssigen, reaktiven Metallen, wie beispielsweise Uran, resistent ist, d. h. beim Kontakt mit dem flüssigen Metall sich nicht zersetzt. Dabei wird $La_2O_3$ in Mischungen ($ZrO_2$) eingesetzt. Diese Mischungen mögen zwar gegenüber Uran stabil sein, sind jedoch gegenüber Titan nicht stabil, da das $ZrO_2$ gegenüber Titan eine sofortige Reaktion eingeht.

Davon ausgehend liegt der Erfindung die **Aufgabe** zugrunde, ein gegenüber Schmelzen aus Titan, Zirkonium oder deren Legierungen thermochemisch stabiles und beständiges Keramiksystem zu schaffen. - Weiterhin soll ein Verfahren zum Herstellen einer Primärschicht auf einem Modell eines zu gießenden Feingußteils oder zum Beschichten eines Tiegels unter Verwendung eines derartigen Keramiksystems geschaffen werden.

Diese Aufgabe wird bezüglich des Keramiksystems durch den Gegenstand des Anspruchs 1 gelöst.

Auf diese Weise ist ein Keramiksystem geschaffen, welches durch flüssige Schmelzen aus Titan, Zirkonium oder dessen Legierungen aufgrund der Verwendung von reinen Lanthan(III)-Verbindungen praktisch nicht angegriffen wird, so daß man ein thermochemisch sehr stabiles Keramiksystem erhält, ohne daß sich beim Gießen alpha-case-Schichten und die damit verbundenen Versprödungserscheinungen bilden. Die LaOF-Keramiksysteme eignen sich aufgrund ihres relativ hohen Schmelzpunktes von 1.900 ° C bis

2.000° C für höher schmelzende Titanlegierungen (einschließlich dem Titan selbst), beispielsweise TiAl6V4 (1.800° C) oder TiAl6V6Zr4Mo4 (1.850° C). Die Erfindung macht sich dabei die Unstöchiometrie von LaOF mit einem sehr weiten Homogenitätsbereich und die Reinheit der Lanthan-Komponenten (mit einem rückstandsfreien Binder) zunutze. Da der Homogenitätsbereich sehr weit ist, kann man Mischungen mit mehr oder weniger $LaF_3$ einstellen. Eine Mischung aus $LaF_3$ und $La_2O_3$ ist im Sinne der Mischphasenthermodynamik nach Glühen eine homogene Mischung, also keine mechanische Verbindung besteht aus den zwei Kristallsorten $La_2O_3$ und $LaF_3$ nebeneinander, sondern eine neue chemische Verbindung (LaOF) mit neuen Eigenschaften, die weder das $La_2O_3$ noch das $LaF_3$ besitzen. Dies ist ein ganz wesentlicher Aspekt, denn LaOF (ob stöchiometrisch oder unstöchiometrisch) besitzt einen wesentlichen höheren Schmelzpunkt als $LaF_3$, ist nicht hygroskopisch, reagiert praktisch nicht mit $CO_2$ (aus der Luft oder aus dem Bindemittel beim Verbrennen), sintert gut, kann besandet werden und ist wegen des "verdünnten Gehalts" an $La_2O_3$ auch gegen Titan beständiger als $La_2O_3$ alleine. Das LaOf (stöchiometrisch oder auch unstöchiometrisch) kann dabei immer aus den Komponenten $LaF_3/La_2O_3$ oder LaOF (stöchiometrisch oder unstöchiometrisch)-/$LaF_3$ (mit geringerer $La_2O_3$-Aktivität aber sinkendem Schmelzpunkt) oder LaOF (stöchiometrisch oder unstöchiometrisch)/$La_2O_3$ (mit erhöhter $La_2O_3$-Aktivität aber steigendem Schmelzpunkt) oder LaOF (stöchiometrisch oder unstöchiometrisch)/$LaF_3/La_2O_3$ aufgebaut werden. Nach dem Glühen bzw. dem Sintervorgang lösen sich dabei die Komponenten ineinander und bilden (gleichgültig wie die Ausgangsmischung zusammengesetzt war) das LaOF (stöchiometrisch oder unstöchiometrisch) mit den anderen, zuvor beschriebenen Eigenschaften. Die zusätzlich in den Keramiksystemen noch enthaltenen Oxyde oder Fluoride von Praseodym, Neodym, Cer sowie Yttrium beeinträchtigen das inerte Verhalten der ansonsten reinen Lanthan(III)Verbindungen praktisch nicht, wobei Praseodym, Neodym und Cer ohnehin immer als Verunreinigungen in Lanthan(III)-Verbindungen technischer Qualität enthalten sind. Yttrium(III)-fluoride und -oxide verbessern im übrigen das Sinterungsverhalten (niedrigere Schmelzpunkte) und kommen mitunter als Verunreinigungen in den in Rede stehenden Lanthan(III)-Verbindungen vor. Da sich Zirkonium bzw. dessen Legierungen vollständig analog verhalten, sind die Keramiksysteme auf der Basis von LaOF, $La_2O_3$ sowie (mit Einschränkungen) $LaF_3$ auch gegenüber Zirkonium und dessen Legierungen beständig.

Als erste Verwendung des erfindungsgemäßen Keramiksystems wird die Verwendung als Gußeinbettmasse bzw. Gußfeineinbettmasse zum Herstellen von Gußformen für Feingußteile aus Titan, Zirkonium oder deren Legierungen insbesondere in der Medizintechnik und dabei insbesondere in der Dentaltechnik vorgeschlagen, wobei bei der Gußfeineinbettmasse diese als dünner Überzug für das Modell, insbesondere aus Wachs, des zu gießenden Feingußteils in Form einer Primärschicht für den weiteren Auftrag einer gewöhnlichen Gußeinbettmasse als Sekundärschicht zur Herstellung der endgültigen Gußform dient. Auf diese Weise wird eine Gußeinbettmasse bzw. Gußfeineinbettmasse mit einem thermochemisch stabilen Keramiksystem geschaffen, so daß auch Feingußteile aus Titan, Zirkonium oder deren Legierungen hergestellt werden können, ohne daß sich beim Gießen alpha-case-Schichten und die damit verbundenen Versprödungserscheinungen bilden.

In einer zweiten Verwendung des erfindungsgemäßen Keramiksystems wird die Verwendung als Beschichtung für einen Tiegel für Schmelzen aus Titan, Zirkonium oder deren Legierungen vorgeschlagen. Auf diese Weise läßt sich in Tiegeln ein Überzug schaffen, der von der Schmelze aus Titan, Zirkonium oder deren Legierungen so gut wie nicht angegriffen wird. Auf diese Weise wird eine Zerstörung des Tiegels verhindert und einem Auslaufen der flüssigen Schmelze entgegengewirkt. Mittels des erfindungsgemäßen Keramiksystems lassen sich beispielsweise folgende Tiegelmaterialien beschichten:

- Korund ($Al_2O_3$)
- Keramik auf der Basis von Aluminiumsilikaten (z.B. Schamotte, Mullit, Molochite)
- Magnesit (MgO)
- Zirkoniumdioxid (stabilisiertes $ZrO_2$)
- Dolomit ($MgO_x.CaO_{1-x}$)
- Chrommagnesite- ($MgO.Cr_2O_3$) und Chromit-Keramiken
- Silika-Keramiken ($SiO_2$-Basis)
- Fosterit-Keramiken ($Mg_2SiO_4$)
- Spinelle (beispielsweise $MgO.Al_2O_3$)
- Titan(IV)-oxid-Keramiken ($TiO_2$)
- Kalkkeramiken (CaO)
- Zirkoniumsilikat-Keramiken ($ZrSiO_4$)
- Graphit- und Glaskohlenstoff-Materialien (unter inerten oder reduzierenden Gasatmosphären oder im Vakuum)
- Silizium-Keramiken (SiC- und $Si_3N_4$ - Basis)

Alle aufgeführten Materialien werden ohne die erfindungsgemäße Keramikbeschichtung auch bei sehr

kurzen Erschmelzungszeiten von Titan bzw. dessen Legierungen vehement innerhalb weniger Sekunden durch chemische Reaktionen angegriffen, aufgelöst und damit der Tiegel zerstört, so daß die flüssige Schmelze ausläuft. Der Schmelzpunkt der keramischen Tiegel-Materialien spielt dabei bei einer kurzzeitigen Aufschmelzprozedur (dicke Tiegelwandstärken (bis zu 1 cm) / Induktionsspule) eine untergeordnete Rolle. Durch die erfindungsgemäße, rißfreie Beschichtung mit dem erfindungsgemäßen Keramiksystem unterbleibt demgegenüber der chemische Angriff auf das Tiegelmaterial.

Besonders wirtschaftlich sind Gießtechniken mit so beschichteten Schamotte- und Korundtiegeln. Selbst LaOF-beschichtete Schamottetiegel mit einer Wandstärke von ca. 5 mm halten bei einer LaOF-Schichtdicke von ca. 1 mm den hohen Angriffen einer flüssigen TiAl6V4-Legierung bei 1800 °C stand. Der Tiegel mit einem Volumen von ca. 100 ml wird dabei unter Vakuum in eine wassergekühlte Kupfer-Induktionsspule eingesetzt und darin zum Zwecke der Herstellung eines feinen Gußteiles, nämlich eines Prothetik-Teils, 50 g der TiAl6V4-Legierung aufgeschmolzen (Schmelzzeit 30 Sekunden). Selbst nach mehrmaligen Aufschmelzversuchen wird das Tiegelmaterial durch die Keramikbeschichtung nicht angegriffen. Die flüssige Titan-Schmelze läßt sich dabei durch ein Schleudergußverfahren in eine Gußform überführen, deren Primärschicht auf der Basis des erfindungsgemäßen Keramiksystems aufgebaut ist. Das entstehende filigrane Gußteil weist eine sehr glatte Oberflächenstruktur auf, die nicht nachgearbeitet werden muß.

Als Verfahren zum Herstellen einer Primärschicht auf einem Modell eines zu gießenden Feingußteils oder zum Beschichten eines Tiegels unter Verwendung eines erfindungsgemäßen Keramiksystems wird mit der Erfindung vorgeschlagen, daß von gemahlenem Lanthan(III)-oxidfluorid (LaOF) oder dessen Mischung mit Lanthan(III)-oxid ($La_2O_3$) mit einem Korndurchmesser < 10 $\mu$m eine Schlemme in einem wasserfreien, organischen Lösungsmittel mit einem Feststoffanteil von 30 bis 70 Gew.-% hergestellt wird, daß in diese Schlemme ein beim Erhitzen rückstandslos verbrennendes und mit dem Lanthan(III)-oxidfluorid (LaOF) und Lanthan(III)-oxid ($La_2O_3$) nicht reagierendes Bindemittel mit einem Anteil von bis zu 15 Gew.-% eingerührt wird und daß die mit einem Bindemittel versehene Schlemme auf das Modell bzw. auf den Tiegel insbesondere durch Eintauchen in die Schlemme oder durch Aufpinseln oder durch Aufsprühen aufgetragen und anschließend getrocknet sowie ausgehärtet wird. Vorzugsweise wird als Lösungsmittel Isopropanol oder ein Carbonsäurester oder Essigsäureethylester sowie als Bindemittel, welches die mechanische Stabilität der Primärschicht erhöht, Celluloseester oder Polyester oder Acrylharz verwendet. Um eine bessere Haftung zur Sekundärschicht zu gewährleisten, wird vorzugsweise die noch nicht getrocknete Primärschicht insbesondere mit Korund oder Quarz besandet. Sofern als Lanthan-Verbindung Lanthan(III)-oxid ($La_2O_3$) und Lanthan (III)-oxidfluorid (LaOF) verwendet wird, werden diese zur Bildung der Schlemme vorzugsweise bei ca. 1000 °C vorgebrannt.

Alternativ dazu wird verfahrensmäßig vorgeschlagen, daß von gemahlenem Lanthan(III)-fluorid ($LaF_3$) mit einem Korndurchmesser von < 10 $\mu$m eine Schlemme in Wasser mit einem Feststoffanteil von 30 bis 60 Gew.-% hergestellt wird, daß in diese Schlemme ein wasserlösliches oder wasserdispergierbares Bindemittel mit einem Anteil von bis zu 15 Gew.-% eingerührt wird und daß die mit einem Bindemittel versehene Schlemme auf das Modell bzw. auf den Tiegel insbesondere durch Eintauchen in die Schlemme oder durch Aufpinseln oder durch Aufsprühen aufgetragen und anschließend getrocknet sowie ausgehärtet wird. Als Bindemittel werden dabei vorzugsweise mit Ammoniak neutralisierte Polycarbonsäuren oder Alkydharze verwendet.

In einer letzten Alternative wird verfahrensmäßig vorgeschlagen, daß von gemahlenem Lanthan(III)-fluorid ($LaF_3$) mit einem Korndurchmesser von < 10 $\mu$m eine Schlemme in einem wasserfreien, organischen Lösungsmittel hergestellt wird, daß in diese Schlemme ein bei Erhitzen rückstandslos verbrennendes, lösliches, organisches Bindemittel eingerührt wird und daß die mit einem Bindemittel versehene Schlemme auf das Modell bzw. auf den Tiegel insbesondere durch Eintauchen in die Schlemme oder durch Aufpinseln oder durch Aufsprühen aufgetragen und anschließend getrocknet sowie ausgehärtet wird. Als Lösungsmittel wird dabei vorzugsweise Alkohol oder Ester, insbesondere Essigsäureethylester, verwendet.

Auf diese Weise lassen sich außer chemisch beständigen Tiegeln für Titan- oder Titanlegierungsschmelzen darüber hinaus Feingußteile aus Titan oder dessen Legierungen schaffen, ohne daß diese aufgrund einer auftretenden alpha-case-Schicht nachbearbeitet bzw. abgearbeitet werden müssen. Somit ist ein Einsatz von Titan oder dessen Legierungen in der Medizintechnik und dabei insbesondere in der Dentaltechnik sowie in anderen noch nicht absehbaren Bereichen möglich. Der Grund für die Eignung der Lanthan-Verbindungen als Keramiksystem ist darin zu sehen, daß chemische Reaktionen zwischen der Gußform und dem flüssigen Titan bzw. dessen Legierung nur in sehr geringem Maße ablaufen, so daß sich ein sehr niedriges Gleichgewichtsniveau einstellt.

Lanthan(III)-oxidfluorid (LaOF), Lanthan(III)-oxid ($La_2O_3$) sowie Lanthan(III)-fluorid ($LaF_3$) zählen nämlich im thermodynamischen Sinne zu den stabilsten Verbindungen und besitzen hinreichend hohe Schmelzpunkte, so daß diese Verbindungen zum Aufbau einer Gußform beispielsweise auch in Form einer

Primärschicht für Feingußteile aus Titan oder dessen Legierungen geeignet sind.

Durch die Verwendung von $LaF_3$ wird bei besonders reaktionsfreudigen Titanlegierungen die $La_2O_3$-Aktivität (beispielsweise in Form der Verbindung $La_2O_3.LaF_3$ = LaOF) verringert, so daß dadurch die Sauerstoffaufnahme durch das Titan bzw. dessen Legierung stark vermindert wird. $LaF_3$ ist dabei weiterhin thermochemisch derart stabil, daß praktisch keine nennenswerten chemischen Reaktionen zwischen dem flüssigen Titan bzw. dessen Legierung und $LaF_3$ ablaufen können. So ist beispielsweise eine Sauerstoffaufnahme durch $LaF_3$ ausgeschlossen. Allerdings liegt der Schmelzpunkt von $LaF_3$ bei 1500 °C (im übrigen der höchste Schmelzpunkt aller binären und stabilen Fluoride), so daß mit einer teilweisen Verflüssigung des $LaF_3$, wenn dieses beispielsweise eine Primärschicht bildet, gerechnet werden muß. Dieser Verflüssigungsvorgang ist stark von den jeweiligen Liquidusbereichen des Titan bzw. dessen Legierungen sowie von der Verfahrenstechnik (Wärmetransport) beim Gießvorgang abhängig, so daß der Schmelzpunkt des $LaF_3$ noch akzeptabel hoch liegt. So ist es in der Technik durchaus bekannt, daß bei kleinen Gußteilen der Liquidusbereich der keramischen Gußform unter dem der zu vergießenden Legierung liegen kann. Im übrigen eignen sich Fluoride besonders für Gußformen, da sie eine sehr glatte Metalloberfläche erzeugen können.

Die ablaufenden chemischen Reaktionen zwischen dem Keramiksystem für die Gußform und dem flüssigen Titan bzw. dessen Legierungen lassen sich berechnen, wobei insbesondere die Lage des chemischen Gleichgewichtes in Abhängigkeit von der Gießtemperatur bestimmt werden kann. So kann numerisch berechnet werden, welche maximalen Belastungen die $LaF_3$-$La_2O_3$-Keramik aushält. Die physikalisch-chemischen Berechnungen hierzu sehen zusammengefaßt folgendermaßen aus:

Auflösungsreaktion von $La_2O_3$ in reiner Form oder in der Verbindung LaOF (= $LaF_3.La_2O_3$):

$$La_2O_3(\text{fest}) + 3\ Ti(\text{fl./Leg.}) \rightleftharpoons 2\ La\ (\text{fl./Leg.}) + 3\ TiO\ (\text{fest/fl.}) \qquad (1)$$

Das Oxidationsprodukt Titan(II)-oxid ($TiO_{1-x}$) ist oberhalb von 1750 °C flüssig (fl.), unterhalb dieser Temperatur liegt es als $\beta$-TiO in fester Form vor.

Die Gleichgewichtskonstante $K_p$ (1) ist wie folgt zu formulieren und kann in Abhängigkeit von der Temperatur berechnet werden:

$$K_p(1) = \frac{a^2(La).a^3(TiO)}{a(La_2O_3).a^3(Ti)} \qquad (2)$$

Dabei ist:

| | |
|---|---|
| a(La) | = Lanthanaktivität, gleichbedeutend mit thermodynamisch wirksame Lanthankonzentration im flüssigen Titan bzw. -legierungen |
| a(Ti) | = Aktivität des Titans in der flüssigen Legierung = 0,8 für die flüssige Legierung TiAl6V4 |
| a(TiO) | = 1 bei Bildung der ersten Gießhaut (unstöchiometrische Verbindung $TiO_{1-x}$) |
| $a(La_2O_3)$ | = 1 für reines $La_2O_3$ oder bei der Verbindung $La_2O_3.LaF_3$ (= LaOF) : $a(La_2O_3)$ = 0,48 analog der isotypen Verbindung $Sm_2O_3.SmF_3$ (= SmOF) mit dem hohen Schmelzpunkt von über 1800 °C |

Die Ergebnisse aus diesen Berechnungen sind in der beiliegenden Graphik von Bild 1 dargestellt. Dabei ist die Lanthan-Aktivität a(La) nach Einstellung eines Gleichgewichtes (Gleichung 1) in der Titanlegierung TiAl6V4 in Abhängigkeit von der Gießtemperatur T für die beiden keramischen Formmassen $La_2O_3$ und LaOF aufgetragen. Es wird dabei von der Annahme ausgegangen, daß ein chemisches Gleichgewicht herrscht.

Aus der graphischen Darstellung gemäß Bild 1 ist erkennbar, daß sich das Gleichgewicht auf einem niedrigen Niveau einstellt. Mit steigender Temperatur ist mit einer ansteigenden Lanthanaufnahme und damit mit einer ansteigenden Sauerstoffaufnahme zu rechnen. Allerdings liegt für $La_2O_3$ die Lanthan-Aktivität bei ca. $10^{-2}$, so daß man hieraus auf eine maximale Lanthan-Aufnahme von maximal 1 bis 2 Gew.-

% Lanthan schließen kann, was einem Sauerstoffgehalt von weniger als ca. 0,2 % entspricht, so daß keine Versprödung infolge der Bildung einer alpha-case-Schicht auftritt. Diese Betrachtungen setzen dabei voraus, daß sich im Augenblick des Gießenvorganges ein chemisches Gleichgewicht einstellt, was in der Praxis allerdings nur annähernd der Fall ist. In der Praxis liegt man immer unter diesen Maximalwerten, wobei die Erfahrung lehrt, daß man bis zum Faktor von ca. 5 niedriger liegt.

Die Lanthan-Aktivität kann auch seitens der Titan-Legierung vorgegeben werden. Im vorliegenden Fall bei a(La) = $10^{-2}$ befinden sich somit ca. 1 bis 2 Gew.-% Lanthan in der Titan-Legierung. Es können dann prinzipiell keine chemischen Reaktionen beim Vergießen zwischen der Keramik und der Titanlegierung mehr stattfinden, so daß damit keine Sauerstoffaufnahme mehr erfolgen kann (Gleichgewicht zwischen den Komponenten).

Die Lanthan-Aktivität und damit die Sauerstoffaufnahme wird bei der Reaktion zwischen LaOF und einer Titan-Legierung nochmals abgesenkt, wie der graphischen Darstellung ebenfalls zu entnehmen ist. Aus den diesbezüglichen Berechnungen läßt sich abschätzen, daß der Lanthangehalt in der Titanlegierung wesentlich unter 0,5 Gew.-% liegt, so daß entsprechend dazu die Sauerstoffaufnahme im Titan weniger als 0,15 Gew.-% beträgt, so daß eine Versprödungsgefahr ausgeschlossen ist. Der Grund hierfür ist die verringerte $La_2O_3$-Aktivität in der Verbindung LaOF (= $La_2O_3.LaF_3$). Die $La_2O_3$-Aktivität kann nochmals durch eine Abweichung von dem molaren Verhältnis $La_2O_3 : LaF_3 = 1 : 1$ durch einen molaren Überschuß von $LaF_3$ in einer Mischung $La_2O_3$-$LaF_3$ oder $LaF_3$-LaOF abgesenkt werden (so daß $La_2O_3 : LaF_3$ kleiner wird als 1 : 1), da die Verbindung LaOF einen weiten Homogenitätsbereich besitzt.

Auflösungsreaktion von $LaF_3$:

$$LaF_3(\text{fest/fl.}) + Ti(\text{fl./Leg.}) \rightleftharpoons TiF_3(g) + La(\text{fl./Leg.}) \quad (3)$$

Im betrachteten Temperaturbereich spielt die Entstehung von gasförmigem Titan(III)-fluorid die dominierende Rolle, so daß hierauf die thermochemischen Betrachtungen und Berechnungen zu beziehen sind. Sauerstoff kann von der Legierung nicht aufgenommen werden. Fluor ist im flüssigen Titan praktisch nicht löslich. Damit die Reaktion überhaupt ablaufen kann, muß der $TiF_3$-Partialdruck größer sein als der äußere Druck (gegen Atmosphärendruck größer als ca. 1 bar). Die Reaktion kann deshalb erst nennenswert im Vakuum ablaufen.

Aus dem Ansatz (3) berechnet sich die Gleichgewichtskonstante $K_p(2)$ zu:

$$K_p(2) = \frac{p(TiF_3) \cdot a(La)}{a(Ti) \cdot a(LaF_3)} \quad (4)$$

$p(TiF_3)$ = Partialdruck des Titan(III)-fluorides, wird gleich 1 bar gesetzt, wenn das Gießverfahren unter Atmosphärendruck (Argon-Atmosphäre) abläuft
a(Ti) = 0,8 für die flüssige TiAl6V4-Legierung
$a(LaF_3)$ = Lanthan(III)-fluorid-Aktivität = 1 bei reiner Phase

Aus dem Ansatz gemäß Gleichung 4 läßt sich die Lanthan-Aktivität a(La) in Abhängigkeit von der Temperatur T berechnen. Die entsprechenden Ergebnisse sind ebenfalls der graphischen Darstellung gemäß Bild 1 zu entnehmen. Die Lanthan-Aktivität liegt dabei zwischen $10^{-6}$ und $10^{-8}$, ist also derart gering, daß keine nennenswerten Reaktionen zwischen $LaF_3$ und den Titan-Legierungen ablaufen können.

Nachfolgend soll die technische Realisierung der Erfindung mit Herstellungsbeispielen erläutert werden.

Wachsausschmelzverfahren:

Beim Wachsausschmelzverfahren wird von dem herzustellenden Titanlegierungsgußteil ein Wachsmodell hergestellt. Das Wachsmodell wird mit einer Primärschicht versehen, die aus den Keramiken LaOF oder aus binären oder ternären Mischungen aus LaOF, $La_2O_3$ sowie $LaF_3$ besteht. Diese Primärschicht kann schalenförmig in mehreren Schichten aufgebaut sein und ist in der Regel 0,5 bis 5 mm stark. Die

Primärschicht kann durch Aufstreuen von niederwertigen Keramikteilen wie beispielsweise Quarzen oder Korund besandet werden, damit eine bessere Haftung zur restlichen Form (Sekundärschicht) hergestellt werden kann. Der restliche Teil der Gußform wird dabei mit einer preiswerten, schnell abbindenden Keramikmasse ausgegossen und ausgefüllt. Auf diese Weise benötigt man nur eine kleine Menge der Lanthan-Keramik. Die Gußform wird schonend getrocknet und langsam auf ca. 200 °C aufgeheizt, so daß das Wachs ausfließt und einen Hohlraum hinterläßt, in den man dann das flüssige Titan bzw. die flüssige Titanlegierung einfließen läßt.

Herstellung der Keramik LaOF:

1 mol Lanthan(III)-nitrat ($La(NO_3)_3$) werden in 2 l destilliertem Wasser aufgelöst und auf ca. 80 °C erwärmt. Zu dieser Lösung wird 1,08 mol Ammoniumfluorid hinzugegeben, das in 200 ml destilliertem Wasser aufgelöst ist. Es fällt 0,36 mol $LaF_3$ aus. Durch Zugabe einer 25 Gew.-%igen Ammoniaklösung (ca. 200 ml) fällt in der Siedehitze bei pH = 9,5 bis 10,5 ein gallertartiger Niederschlag von Lanthan(III)-hydroxid ($La(OH)_3$.aq) aus, der sich innig mit dem ausgefallenen Lanthan(III)-fluorid vermischt hat. Die Fällung läßt man ca. 2 Stunden bei 80 °C stehen und filtriert dann den Niederschlag ab. Dieser wird mit einer Ammoniaklösung ausgewaschen und anschließend getrocknet. Man erhält dabei eine Ausbeute von nahezu 100 % (bezogen auf das trockene Produkt). Das Produkt wird anschließend auf ca. 900 bis 1050 °C 2 Stunden lang erhitzt. Man erhält dann die tetragonale Phase des LaOF mit einem weiten Homogenitätsbereich.

Beim Glühen von mehr als 10 Stunden wird die scharf definierte rhombische Phase von der Verbindung LaOF erhalten. Da beim späteren Glühen der Keramikformen sich die rhombische Phase bilden kann, wird zunächst nur die einfacher herzustellende tetragonale Phase hergestellt. Beim Glühen der Keramik muß auf den Ausschluß von Luftfeuchtigkeit geachtet werden.

Die Verbindung LaOF kann auch durch Glühen der beiden Bestandteile $La_2O_3$ und $LaF_3$ im stöchiometrischen Verhältnis 1 : 1 hergestellt werden. Da aber diese Festkörperreaktionen zwischen Partikeln im Temperaturbereich um 1000 °C nur langsam ablaufen, ist dies ein relativ unwirtschaftlicher Weg.

Ein wirtschaftlicher Weg zur Herstellung der LaOF-Keramik ist auch ohne Reaktionen in einem Lösungsmittel möglich. (1 + 0,5) mol $La_2O_3$ (Lanthan(III)-oxid) werden mit 1,5 mol Ammoniumhydrogendifluorid ($NH_4HF_2$) z.B. in einer Kugelmühle gemahlen. Nach kurzer Mahlzeit von ca. 20 Minuten findet ein spontaner Umsatz von $La_2O_3$ mit $NH_4HF_2$ unter Wärmeentwicklung im festen Zustand statt:

$$1/2\ La_2O_3 + 3/2\ NH_4HF_2 \rightarrow LaF_3 + 3/2\ NH_3 + 3/2\ H_2O \quad (5)$$

Das Ammoniak entweicht gasförmig. Das gebildete Wasser wird größtenteils vom $La_2O_3$ zu $La(OH)_3$ bzw. LaO(OH) (stöchiometrische Überschußmenge an $La_2O_3$ von 1 mol in der Ausgangsmischung) gebunden. Hierdurch entsteht eine sehr innige Mischung von $La_2O_3$, $La(OH)_3$, $LaF_3$ LaO(OH) und auch schon teilweise LaOF. Nach kurzer Glühzeit (1 Stunde bei 1000 °C) geht die Mischung vollständig in LaOF über. Die Ausbeute liegt dabei praktisch bei 100%.

Das Ausdehnungsverhalten einer LaOF-Keramikschicht zeigt die Dilatometerkurve in Bild 2. Die LaOF-Keramikschicht wurde dabei (wie nachfolgend anhand Herstellungsbeispiel 1 beschrieben) aus LaOF- Pulver mit Polyester als Bindemittel (8 Gew.-% in Essigsäureethylester) hergestellt. Die Schichtdicke des hergestellten Rohlings betrug 3 mm. Die LaOF-Schicht wurde mit einer Aufheizgeschwindigkeit von 10 °C/min unter Luft aufgeheizt. Bei 1000 °C wurde die LaOF-Schicht eine halbe Stunde lang gehalten und anschließend mit 10 °C/min auf Raumtemperatur kontrolliert wieder abgekühlt. Bis ca. 200 °C - 400 °C brennt das Bindemittel ab, ohne daß die Schicht zerstört wird. Sie bleibt dabei kompakt. Bei 510 °C läßt sich eine Umwandlung des LaOF erkennen, die mit einer geringen Längenänderung von 0,15 % verbunden ist. Diese Umwandlung ist reversibel. Der mittlere lineare Ausdehnungskoeffizient von LaOF steht in Übereinstimmung mit vielen Keramiksystemen, die als Tiegelmaterialien Verwendung finden. Hierauf beruht die gute Beschichtstabilität und die guten Haftungseigenschaften bei thermischen Belastungen. Ab 900 °C sintert das LaOF unter Volumenverminderung zusammen und bildet eine sich verhärtende LaOF-Schicht. Bei einer Haltezeit von einer halben Stunde bei 1000 °C wird eine Längenänderung von ca. 0,5 % gemessen. Bei der Abkühlung durchläuft die LaOF-Schicht eine zur Aufheizkurve parallele Funktion (gleiche Steigung mit der Umwandlung bei 500-510 °C).

Herstellungsbeispiel 1

Zunächst wird LaOF auf einen Korndurchmesser von weniger als 10 µm gemahlen. Von dem gemahlenen Produkt wird eine Schlemme in einem wasserfreien, organischen Lösungsmittel (beispielsweise Isopropanol oder Essigsäureethylester) mit einem Feststoffanteil von 30 bis 70 Gew.-% hergestellt. In diese Schlemme wird ein Bindemittel (beispielsweise Celluloseester oder Polyester) mit einem Anteil von bis zu 15 Gew.-% eingerührt, wobei das Bindemittel beim Erhitzen rückstandslos verbrennt und keine Reaktionen mit der Lanthan-Keramik eingeht.

In diese fertige Schlemme wird dann das Wachsmodell eingetaucht. Alternativ kann die Schlemme auch mit einem Pinsel oder durch Aufsprühen aufgetragen werden. Bei Teilen mit geringen Durchmessern und kleinen Durchbrüchen ist dabei darauf zu achten, daß die Lanthan-Keramikmasse bis in die kleinsten Hohlräume im Modell vorgedrungen ist. Durch Verdünnen mit dem organischen Lösungsmittel läßt sich eine optimale Viskosität einstellen. Man zieht anschließend das Modell aus der Schlemme und läßt es kurz trocknen (ca. 2 Minuten). Durch kurzes Wiedereintauchen in die Schlemme läßt sich die Schicht verstärken. Es kann anschließend eine Besandung mit Korund folgen, wobei darauf zu achten ist, daß die Primärschicht noch nicht vollständig eingetrocknet ist. Dieser Vorgang wird gegebenenfalls mehrfach wiederholt.

Anschließend läßt man das Modell aushärten. Mit einer Mischung aus Quarz-Modifikationen und einem vorhydrolisierten, in Ethanol gelösten Kieselsäureester und einer Ammoniaklösung als Härter wird schließlich die restliche Form zur Bildung der Sekundärschicht aufgefüllt. Die Abbindezeiten für die Hinterfütterung betragen dabei 10 bis 20 Minuten. Die rohe Keramikform wird anschließend langsam auf 200 °C erhitzt, wobei das Wachs ausfließt und die organischen Lösungsmittel verdampfen. Danach wird die Form in einen Muffelofen gestellt und heizt sie innerhalb von 1 bis 2 Stunden auf 900 °C auf. In den gebildeten Hohlraum, der nur von der LaOF-Keramik abgegrenzt ist, wird dann die flüssige Titanlegierung TiAl6V4 mit einer Temperatur von 1750 °C hineingegossen. Dies erfolgt unter einer Argongasatmospähre, die durch Oxysorb auf ca. 99,999 Vol.-% gereinigt wurde. Die so gebildeten Feingußteile aus der Titanlegierung besitzen keine alpha-case-Schicht und somit eine hohe Oberflächengüte. Die herstellte LaOF-Keramik hält den hohen Temperaturen des Titans bzw. dessen Legierungen stand, da ihr Schmelzpunkt über der Gießtemperatur von 1750 °C liegt. Die Lanthanaufnahme in der Titanlegierung liegt unterhalb von 0,1 Gew.-%.

Herstellungsbeispiel 2

Das $LaF_3$ kann auch in wässrigen Systemen verwendet werden, da es nicht hygroskopisch ist. Zu diesem Zweck wird das $LaF_3$ zunächst auf einen Korndurchmesser von weniger als 10 µm gemahlen. Es wird eine Schlemme in Wasser mit einem 30 bis 60 %igen Feststoffanteil hergestellt. Zur mechanischen Stabilisierung der zu bildenden Primärschicht werden in die Schlemme wasserlösliche oder wasserdispergierbare ßindemittel mit einem Anteil bis zu 15 Gew.-% mit eingerührt. Als Bindemittel können beispielsweise Polycarbonsäuren oder Alkydharze verwendet werden, die mit Ammoniak neutralisiert wurden. Aus dieser Schlemme heraus findet dann der schalenförmige Aufbau der Primärschicht statt, analog wie er beim Herstellungsbeispiel 1 beschrieben wurde. Die Hinterfütterung der restlichen Form kann alternativ mit einer phosphatgebundenen $MgO$-$SiO_2$-Keramik (verschiedene Sorten Quarze, je nach Expansionsverhalten) oder mit einer Mischung von Quarzen, die durch einen vorhydrolisierten Kieselsäureester in Ethanol mit Ammoniak als Härter abgebunden wird, durchgeführt werden. Es wurde nämlich festgestellt, daß auch eine phosphatgebundene $MgO$ - $SiO_2$ - Masse zur Hinterfütterung bei Verwendung höherschmelzender Legierungen geeignet ist. Die Hinterfütterung mit reinen Quarzen ist auch für höherschmelzende Legierungen geeignet. Die Verarbeitung der Form geschieht dann analog wie beim Herstellungsbeispiel 1.

Die $LaF_3$-Schicht schmilzt beim Vergießen von Titan-Legierungen partiell auf. Sie kann aber durch geringe Zugabe von $La_2O_3$ (maximal 10 Gew.-%) thermisch stabilisiert werden, so daß das partielle Aufschmelzen minimal wird und sich die Geometrie des Feingußteils praktisch nicht verändert. Die Oberflächengüte ist dabei gut, wobei eine Bildung einer alpha-case-Schicht nicht stattfindet. Die Lanthanaufnahme durch das $LaF_3$ liegt unter 0,02 Gew.-% (bezogen auf TiMn8 bei einer Gießtemperatur von ca. 1680 °C).

Die Herstellung der Primärschicht aus $LaF_3$ kann auch aus einer wasserfreien organischen Phase (Alkohole oder Ester) mit entsprechend löslichen organischen Bindemitteln, die beim Erhitzen restlos verbrennen, stattfinden.

Auf organische Lösungsmittel, die wasserfrei sein müssen, kann nicht verzichtet werden, wenn $La_2O_3$ in der Primärschicht mit eingebaut werden soll. Ansonsten würde die Primärschicht infolge der Hydratisierungs- und Carbonatisierungsreaktion zerstört.

Herstellungsbeispiel 3

Dieses Beispiel zeigt die Herstellung einer Beschichtung für einen Tiegel. Dabei wird zunächst entsprechend der zuvor beschriebenen "Herstellung der Keramik LaOF" Lanthan(III)-oxidfluorid (LaOF) aus Lanthan(III)-nitrat hergestellt. Das LaOF wird anschließend mit einer Kornfraktion von 10 bis 40 $\mu$m gemahlen. Von diesem gemahlenen Produkt wird eine Schlemme in einem wasserfreien, organischen Lösungsmittel (beispielsweise Essigsäureethylester) mit einem LaOF-Feststoffanteil von 40 bis 70 Gew.-% hergestellt. In diese Schlemme wird ein Bindemittel (beispielsweise Celluloseester oder Polyester oder Acrylharz) mit einem Anteil bis zu 10 Gew.-% eingerührt und aufgelöst. Das Bindemittel soll später beim Erhitzen rückstandslos verbrennen und keine chemischen Reaktionen mit der Lanthan-Keramik eingehen.

Die so gebildete Schlemme wird anschließend auf die Innenoberfläche des Tiegelmaterials aufgetragen, welche später die Kontaktfläche zur Schmelze bildet. Das Auftragen kann beispielsweise durch Eintauchen, Aufpinseln, Aufsprühen oder Aufspritzen erfolgen. Das Lösungsmittel verdunstet rasch (innerhalb ca. 5 Minuten) und es bleibt auf der Tiegeloberfläche eine dünne, kratzfeste LaOF-Schicht zurück. Daneben sind auch andere Beschichtungstechniken ohne die Verwendung von organischen Komponenten im Trockenverfahren denkbar, beispielsweise das Flammenspritzverfahren, Sputterverfahren oder Plasmaspritzverfahren. Das aufgetragene LaOF wird anschließend bei 1000 °C für die Dauer von zwei Stunden in die Tiegeloberfläche eingebrannt und eingesintert.

## Patentansprüche

1. Keramiksystem für Schmelzen aus Titan, Zirkonium oder deren Legierungen unter Verwendung von wenigstens einer Lanthan-Verbindung,
**dadurch gekennzeichnet,**
daß das Keramiksystem rein aus Lanthan(III)-oxidfluorid (LaOF) oder aus binären oder ternären Mischungen aus Lanthan(III)-oxidfluorid (LaOF), Lanthan(III)-oxid ($La_2O_3$) sowie Lanthan(III)-fluorid ($LaF_3$) und einem beim Erhitzen rückstandslos verbrennenden Bindemittel aufgebaut ist und daß das Keramiksystem zusätzlich noch Praseodymfluorid und/oder -oxid und/oder Neodymfluorid und/oder -oxid und/oder Cerfluorid und/oder -oxid und/oder Yttriumfluorid und/oder -oxid enthält.

2. Keramiksystem nach Anspruch 1, dadurch gekennzeichnet, daß der Anteil des Zusatzstoffes bzw. der Zusatzstoffe bis zu 8 Gew.-% des Keramiksystems ausmacht.

3. Verwendung des Keramiksystems nach Anspruch 1 oder 2 als Gußeinbettmasse bzw. Gußfeineinbettmasse zum Herstellen von Gußformen für Feingußteile aus Titan, Zirkonium oder deren Legierungen insbesondere in der Medizintechnik und dabei insbesondere in der Dentaltechnik, wobei bei der Gußfeineinbettmasse diese als dünner Überzug für das Modell, insbesondere aus Wachs, des zu gießenden Feingußteils in Form einer Primärschicht für den weiteren Auftrag einer gewöhnlichen Gußeinbettmasse als Sekundärschicht zur Herstellung der endgültigen Gußform dient.

4. Verwendung des Keramiksystems nach Anspruch 1 oder 2 als Beschichtung für einen Tiegel für Schmelzen aus Titan, Zirkonium oder deren Legierungen.

5. Verfahren zum Herstellen einer Primärschicht auf einem Modell eines zu gießenden Feingußteils oder zum Beschichten eines Tiegels unter Verwendung eines Keramiksystems nach einem der Ansprüche 1 oder 2,
**dadurch gekennzeichnet,**
daß von gemahlenem Lanthan(III)-oxidfluorid (LaOF) oder dessen Mischung mit Lanthan(III)-oxid ($La_2O_3$) mit einem Korndurchmesser von $< 10\ \mu$m eine Schlemme in einem wasserfreien, organischen Lösungsmittel mit einem Feststoffanteil von 30 bis 70 Gew.-% hergestellt wird,
daß in diese Schlemme ein beim Erhitzen rückstandslos verbrennendes und mit dem Lanthan(III)-oxidfluorid (LaOF) und Lanthan(III)-oxid ($La_2O_3$) nicht reagierendes Bindemittel mit einem Anteil von bis zu 15 Gew.-% eingerührt wird und daß die mit einem Bindemittel versehene Schlemme auf das Modell bzw. auf den Tiegel insbesondere durch Eintauchen in die Schlemme oder durch Aufpinseln oder durch Aufsprühen aufgetragen und anschließend getrocknet sowie ausgehärtet wird.

6. Verfahren nach Anspruch 5, dadurch gekennzeichnet, daß als Lösungsmittel Isopropanol oder ein Carbonsäureester oder Essigsäureethylester verwendet wird.

7. Verfahren nach Anspruch 5 oder 6, dadurch gekennzeichnet, daß als Bindemittel Celluloseester oder Polyester oder Acrylharz verwendet wird.

8. Verfahren nach einem der Ansprüche 5 bis 7, dadurch gekennzeichnet, daß die noch nicht getrocknete Primärschicht insbesondere mit Korund oder Quarz besandet wird.

9. Verfahren nach einem der Ansprüche 5 bis 8 unter Verwendung von Lanthan(III)-oxid ($La_2O_3$) und Lanthan (III)-oxidfluorid (LaOF), dadurch gekennzeichnet, daß das Lanthan(III)-oxid ($La_2O_3$) und Lanthan-(III)-oxidfluorid (LaOF) vor Bildung der Schlemme bei ca. 1000 °C vorgebrannt wird.

10. Verfahren zum Herstellen einer Primärschicht auf einem Modell eines zu gießenden Feingußteils oder zum Beschichten eines Tiegels unter Verwendung eines Keramiksystems nach einem der Ansprüche 1 oder 2,
**dadurch gekennzeichnet,**
daß von gemahlenem Lanthan(III)-fluorid ($LaF_3$) mit einem Korndurchmesser von < 10 $\mu$m eine Schlemme in Wasser mit einem Feststoffanteil von 30 bis 60 Gew.-% hergestellt wird,
daß in diese Schlemme ein wasserlösliches oder wasserdispergierbares Bindemittel mit einem Anteil von bis zu 15 Gew.-% eingerührt wird und
daß die mit einem Bindemittel versehene Schlemme auf das Modell bzw. auf den Tiegel insbesondere durch Eintauchen in die Schlemme oder durch Aufpinseln oder durch Aufsprühen aufgetragen und angetrocknet sowie ausgehärtet wird.

11. Verfahren nach Anspruch 10, dadurch gekennzeichnet, daß als Bindemittel mit Ammoniak neutralisierte Polycarbonsäuren oder Alkydharze verwendet werden.

12. Verfahren zum Herstellen einer Primärschicht auf einem Modell eines zu gießenden Feingußteils oder zum Beschichten eines Tiegels unter Verwendung eines Keramiksystems nach einem der Ansprüche 1 oder 2,
**dadurch gekennzeichnet,**
daß von gemahlenem Lanthan(III)-fluorid ($LaF_3$) mit einem Korndurchmesser von < 10 $\mu$m eine Schlemme in einem wasserfreien, organischen Lösungsmittel hergestellt wird,
daß in diese Schlemme ein bei Erhitzen rückstandslos verbrennendes, lösliches, organisches Bindemittel eingerührt wird und
daß die mit einem Bindemittel versehene Schlemme auf das Modell bzw. auf den Tiegel insbesondere durch Eintauchen in die Schlemme oder durch Aufpinseln oder durch Aufsprühen aufgetragen und angetrocknet sowie ausgehärtet wird.

13. Verfahren nach Anspruch 12, dadurch gekennzeichnet, daß als Lösungsmittel Alkohol oder Ester, insbesondere Essigsäureethylester verwendet wird.

## Claims

1. Ceramic system for melts of titanium, zirconium or their alloys using at least one lanthanum compound, characterised in that the ceramic system is made up purely of lanthanum(III) oxyfluoride (LaOF) or of binary or ternary mixtures of lanthanum(III) oxyfluoride (LaOF), lanthanum(III) oxide ($La_2O_3$) and lanthanum(III) fluoride ($LaF_3$) and a binder which burns off without residue on heating, and in that the ceramic system additionally contains praseodymium fluoride and/or oxide and/or neodymium fluoride and/or oxide and/or cerium fluoride and/or oxide and/or yttrium fluoride and/or oxide.

2. Ceramic system according to Claim 1, characterised in that the proportion of the additive or the additives comprises up to 8% by weight of the ceramic system.

3. Use of the ceramic system according to Claim 1 or 2 as an investment casting compound or a fine investment casting compound for the production of casting moulds for fine castings of titanium, zirconium or their alloys, especially in medical technology and very especially in dental technology, where in the case of the fine investment casting compound this serves as a thin coating for the pattern, especially of wax, of the fine casting to be cast, in the form of a primary layer for the further application of a customary investment casting compound as a secondary layer for production of the final casting

mould.

4. Use of the ceramic system according to Claim 1 or 2 as a coating for a crucible for melts of titanium, zirconium or their alloys.

5. Process for the production of a primary layer on a pattern of a fine casting to be cast or for the coating of a crucible using a ceramic system according to one of Claims 1 or 2, characterised in that a slurry of ground lanthanum(III) oxyfluoride (LaOF) or a mixture thereof with lanthanum(III) oxide ($La_2O_3$) having a particle diameter of < 10 $\mu$m in an anhydrous organic solvent having a solids content of from 30 to 70% by weight is prepared, in that a binder which burns off without residue on heating and which does not react with the lanthanum(III) oxyfluoride (LaOF) and lanthanum(III) oxide ($La_2O_3$), in a proportion of up to 15% by weight is stirred into this slurry, and in that the slurry containing the binder is applied to the pattern or to the crucible, especially by immersion in the slurry or by brushing on or spraying on, and is subsequently dried and cured.

6. Process according to Claim 5, characterised in that the solvent used is isopropanol or a carboxylic ester or ethyl acetate.

7. Process according to Claim 5 or 6, characterised in that the binder used is cellulose ester or polyester or acrylic resin.

8. Process according to one of Claims 5 to 7, characterised in that the not yet dried primary layer has a sandlike layer, especially of corundum or quartz, applied to it.

9. Process according to one of Claims 5 to 8 using lanthanum(III) oxide ($La_2O_3$) and lanthanum(III) oxyfluoride (LaOF), characterised in that the lanthanum(III) oxide ($La_2O_3$) and lanthanum(III) oxyfluoride (LaOF) are fired at about 1000 °C before formation of the slurry.

10. Process for producing a primary layer on a pattern of a fine casting to be cast or for coating a crucible using a ceramic system according to one of Claims 1 or 2, characterised in that a slurry of ground lanthanum(III) fluoride ($LaF_3$) having a particle diameter of < 10 $\mu$m in water with a solids content of from 30 to 60% by weight is prepared, in that a water-soluble or water-dispersible binder in a proportion of up to 15% by weight is stirred into the slurry, and in that the slurry containing a binder is applied to the pattern or to the crucible, especially by immersion in the slurry or by brushing on or spraying on, and is dried on and cured.

11. Process according to Claim 10, characterised in that the binders used are polycarboxylic acids neutralised with ammonia, or alkyd resins.

12. Process for producing a primary layer on a pattern of a fine casting to be cast or for coating a crucible using a ceramic system according to one of Claims 1 or 2, characterised in that a slurry of ground lanthanum(III) fluoride ($LaF_3$) having a particle size of < 10 $\mu$m in an anhydrous organic solvent is prepared, in that a soluble organic binder which burns off without residue on heating is stirred into this slurry, and in that this slurry containing a binder is applied to the pattern or to the crucible, especially by immersion in the slurry or by brushing on or spraying on, and is dried on and cured.

13. Process according to Claim 12, characterised in that the solvent used is an alcohol or ester, especially ethyl acetate.

## Revendications

1. Système céramique destiné à des fusions de titane, de zirconium ou de leurs alliages en utilisant au moins un composé de lanthane, caractérisé en ce que le système céramique est constitué de fluorure d'oxyde de lanthane (III) (LaOF) pur ou de mélanges binaires ou ternaires de fluorure d'oxyde de lanthane (III) (LaOF), d'oxyde de lanthane (III) ($La_2O_3$), ainsi que de fluorure de lanthane (III) ($LaF_3$)et d'un liant se consummant sans résidus au chauffage, et en ce que le système céramique contient encore en plus du fluorure et/ou de l'oxyde de praséodyme, et/ou du fluorure et/ou de l'oxyde de néodyme, et/ou du fluorure et/ou de l'oxyde de cérium, et/ou du fluorure et/ou de l'oxyde d'yttrium.

2. Système céramique selon la revendication 1, caractérisé en ce que l'adjuvant ou les adjuvants représente(nt) une proportion pouvant aller jusqu'à 8 % en poids du système céramique.

3. Utilisation du système céramique selon l'une quelconque des revendications 1 ou 2, en tant que masse d'enrobage de coulée ou de masse d'enrobage de coulée de précision, pour la fabrication de moules de coulée destinés à des pièces moulées de précision en titane, en zirconium ou leurs alliages, en particulier dans la technique médicale, et en l'occurrence dans la technique dentaire plus particulièrement, étant précisé qu'en ce qui concerne la masse d'enrobage de coulée de précision, celle-ci sert de revêtement mince au modèle, plus particulièrement en cire, de la pièce moulée de précision à couler sous la forme d'une couche primaire destinée à l'application ultérieure d'une couche secondaire constituée d'une masse d'enrobage de coulée ordinaire pour la fabrication du moule de coulée définitif.

4. Utilisation du système céramique selon l'une quelconque des revendications 1 ou 2, en tant que revêtement pour un creuset destiné à des fusions de titane, de zirconium ou de leurs alliages.

5. Procédé destiné à la fabrication d'une couche primaire sur un modèle d'une pièce moulée de précision à couler, ou au revêtement d'un creuset, en utilisant un système céramique selon l'une quelconque des revendications 1 ou 2, caractérisé en ce qu'à partir du fluorure d'oxyde de lanthane (III) (LaOF) ou de ses mélanges avec de l'oxyde de lanthane (III) ($La_2O_3$) moulus ayant une granulométrie < 10 $\mu$m, il est préparé une élutriation dans un solvant organique anhydre ayant une proportion en matières solides de 30 à 70 % en poids,

en ce qu'un liant se consummant sans résidus au chauffage et ne réagissant pas avec le fluorure d'oxyde de lanthane (III) (LaOF) et l'oxyde de lanthane (III) ($La_2O_3$) est délayé dans cette élutriation dans une proportion pouvant aller jusqu'à 15 % en poids, et en ce que l'élutriation contenant un liant est appliquée sur le modèle ou sur le creuset, en particulier par immersion dans l'élutriation, ou au pinceau ou par pulvérisation, et qu'elle est ensuite séchée et durcie.

6. Procédé selon la revendication 5, caractérisé en ce qu'il est utilisé comme solvant de l'isopropanol ou un ester carboxylique ou de l'éther éthylacétique.

7. Procédé selon l'une quelconque des revendications 5 ou 6, caractérisé en ce qu'il est utilisé comme liant de l'ester cellulosique ou du polyester ou de la résine acrylique.

8. Procédé selon l'une quelconque des revendications 5 à 7, caractérisé en ce que la couche primaire non encore sèche est sablée, en particulier avec du corindon ou du quartz.

9. Procédé selon l'une quelconque des revendications 5 à 8, utilisant de l'oxyde de lanthane (III) ($La_2O_3$) et du fluorure d'oxyde de lanthane (III) (LaOF), caractérisé en ce que l'oxyde de lanthane (III) ($La_2O_3$) et le fluorure d'oxyde de lanthane (III) (LaOF) sont précalcinés à une température de l'ordre de 1.000° C avant la préparation de l'élutriation.

10. Procédé destiné à la fabrication d'une couche primaire sur un modèle d'une pièce moulée de précision à couler, ou au revêtement d'un creuset, en utilisant un système céramique selon l'une quelconque des revendications 1 ou 2, caractérisé en ce qu'avec du fluorure de lanthane (III) ($LaF_3$) moulu ayant une granulométrie < 10 $\mu$m, il est préparé une élutriation dans de l'eau ayant une teneur en matières solides de 30 à 60 % en poids,

en ce qu'un liant soluble dans l'eau ou se dispersant dans l'eau est délayé dans cette élutriation dans une proportion pouvant aller jusqu'à 15 % en poids, et

en ce que l'élutriation contenant un liant est appliquée sur le modèle ou sur le creuset, en particulier par immersion dans l'élutriation, ou au pinceau ou par pulvérisation, et qu'elle est ensuite séchée et durcie.

11. Procédé selon la revendication 10, caractérisé en ce qu'il est utilisé comme liant des acides polycarboxyliques ou des résines alkydes neutralisés avec de l'ammoniac.

12. Procédé destiné à la fabrication d'une couche primaire sur un modèle d'une pièce moulée de précision à couler, ou au revêtement d'un creuset, en utilisant un système céramique selon l'une quelconque des revendications 1 ou 2, caractérisé en ce qu'avec du fluorure de lanthane (III) ($LaF_3$) moulu ayant une

granulométrie < 10 µm, il est préparé une élutriation dans un solvant organique anhydre,

en ce qu'un liant organique soluble se consummant sans résidus au chauffage et délayé dans cette élutriation, et

en ce que l'élutriation contenant un liant est appliquée sur le modèle ou sur le creuset, en particulier par immersion dans l'élutriation, ou au pinceau ou par pulvérisation, et qu'elle est ensuite séchée et durcie.

**13.** Procédé selon la revendication 12, caractérisé en ce qu'il est utilisé comme solvant de l'alcool ou de l'ester, en particulier de l'éther éthylacétique.

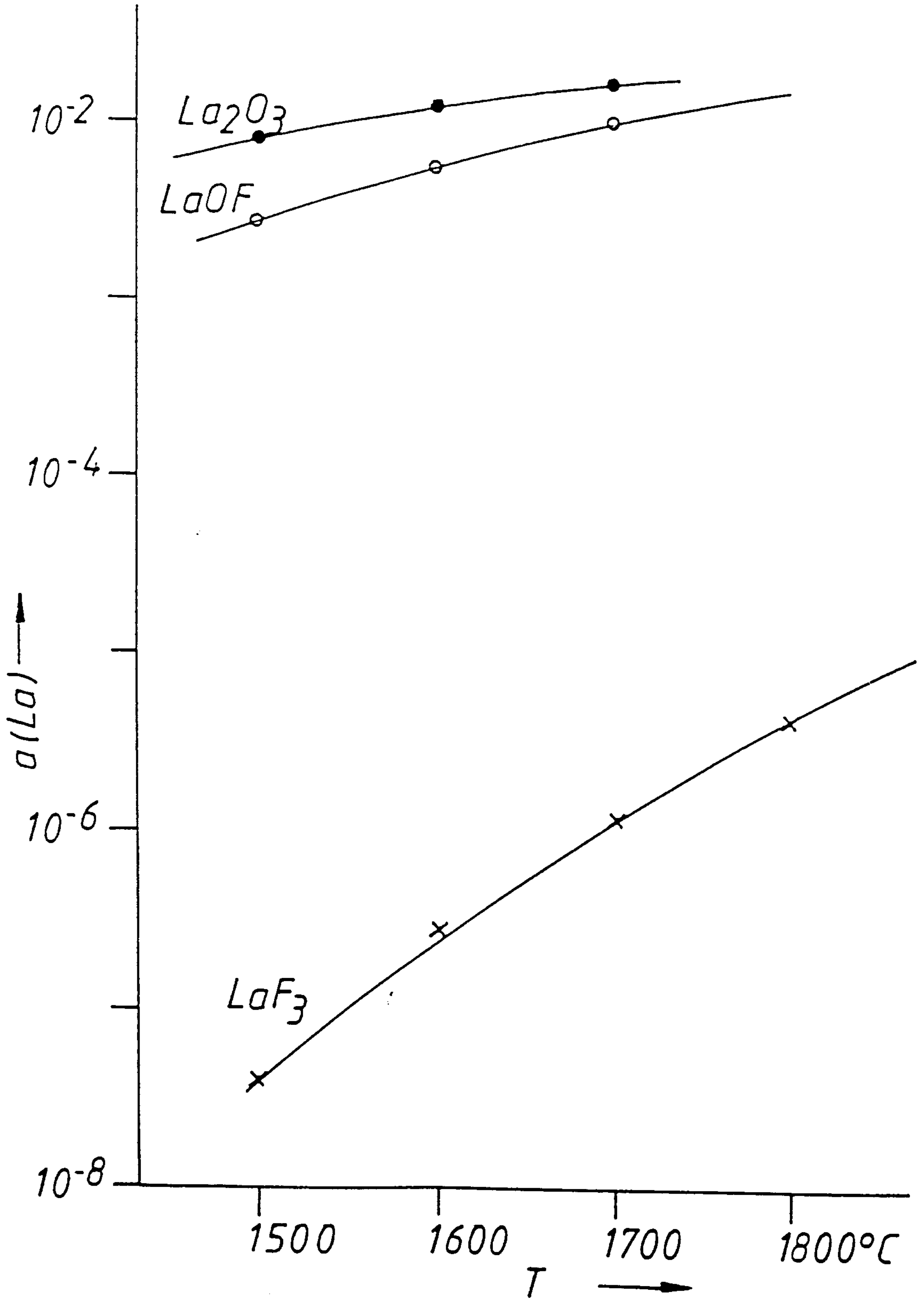


Bild 1: Lanthan-Aktivität a(La) in einer flüssigen Titanlegierung in Abhängigkeit von der Kontakttemperatur T an der Phasengrenze lanthanoxid-/-fluoridhaltige Primärschicht und flüssiger Titanlegierung (Titan-Aktivität : a(Ti)=0,8, entsprechend beispielsweise TiAl6V4) und für die Verbindungen $La_2O_3$, LaOF, $LaF_3$ Annahme: chemisches Gleichgewicht

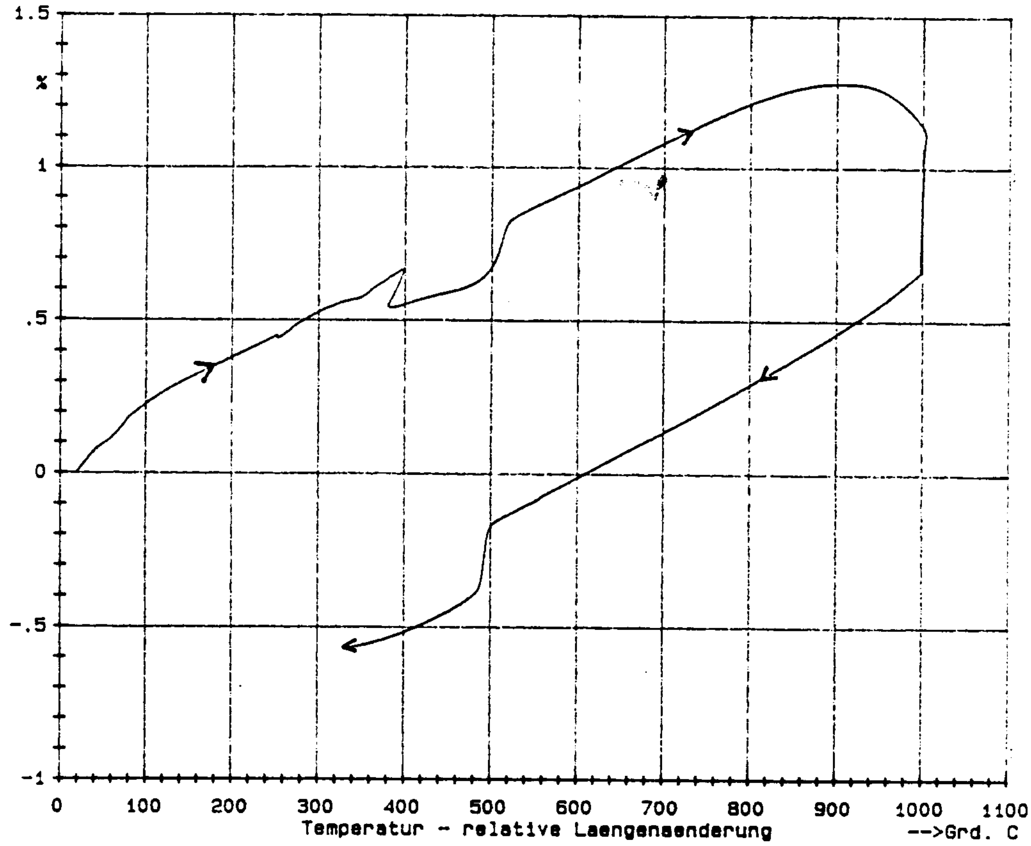


Bild 2: Dilatometer-Kurve von LaOF bei folgenden Bedingungen:

- Schichtdicke 3mm
- Aufheizgeschwindigkeit 10°C/min
- Haltepunkt 1000°C für 30 Minuten
- Abkühlungsgeschwindigkeit 10°C/min auf Raumtemperatur